# EUROPEAN PATENT SPECIFICATION

(11) **EP 2 688 245 B1**
(45) Date of publication and mention of the grant of the patent: **10.07.2019**
(21) Application number: 11860878.5
(22) Date of filing: 03.05.2011
(51) Int. Cl.: H04L 12/24

(54) **METHOD, AUTO-CONFIGURATION SERVER (ACS), AND SYSTEM FOR OBTAINING STATUS OF DEVICE BASED ON TR069 PROTOCOL**
VERFAHREN, AUTOKONFIGURATIONSSERVER (ACS) UND SYSTEM ZUR ERZIELUNG EINES GERÄTESTATUS AUF DER BASIS EINES TR069-PROTOKOLLS
PROCÉDÉ, SERVEUR D'AUTO-CONFIGURATION (ACS), ET SYSTÈME PERMETTANT D'OBTENIR L'ÉTAT D'UN DISPOSITIF SUR LA BASE DU PROTOCOLE TR069

(30) Priority: 15.03.2011 CN 201110062135
(43) Date of publication of application: 22.01.2014
(73) Proprietor: ZTE Corporation, Shenzhen, Guangdong 518057 (CN)
(72) Inventor: YIN, Baoyu, Shenzhen Guangdong 518057 (CN); LU, Chunjun, Shenzhen Guangdong 518057 (CN)
(74) Representative: Modiano, Micaela Nadia
(86) International application number: PCT/CN2011/073603
(87) International publication number: WO 2012/122730

(56) References cited:
- EP-A2- 0 777 357
- CN-A- 101 159 684
- CN-A- 101 360 021
- US-B1- 7 143 152
- DSLHOME-TECHNICAL WORKING GROUP: "CPE WAN Management Protocol", INTERNET CITATION, May 2004 (2004-05), XP002316355, Retrieved from the Internet: URL:http://www.dslforum.org/aboutdsl/Techn ical_Reports/TR-069.pdf [retrieved on 2005-02-04]

## Description

### TECHNICAL FIELD

The disclosure relates to the field of network management technology, and in particular to a method, an Auto-Configuration Server (ACS) and a system for obtaining a status of a device based on a Tr069 protocol.

### BACKGROUND

Along with quick development of network management technology of a device and rapid promotion of performance of a network management server, the network management server needs to manage devices the number of which increases geometrically. How to manage these devices quickly and efficiently becomes a great problem in a network management system.

In the field of network management, the number of the devices is huge and the types of the devices are various. How to manage these devices becomes a great problem. An existing Simple Network Management Protocol (SNMP) causes management thereof to become more and more complex and thus to be difficult to implement due to insecurity of data transmission and randomness of data definition. The Tr069 protocol formulated by a Broadband Forum (BBF) better solves the above problem. The technical report "CPE WAN Management Protocol" by the DSL Forum TR-069 in May 2004 provides a protocol that allows an Auto Configuration Server (ACS) to provision a Customer Premises Equipment (CPE) or a collection of CPE based on a variety of criteria.

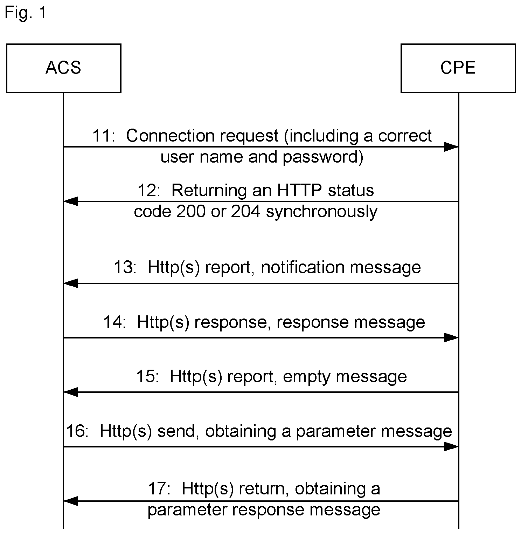

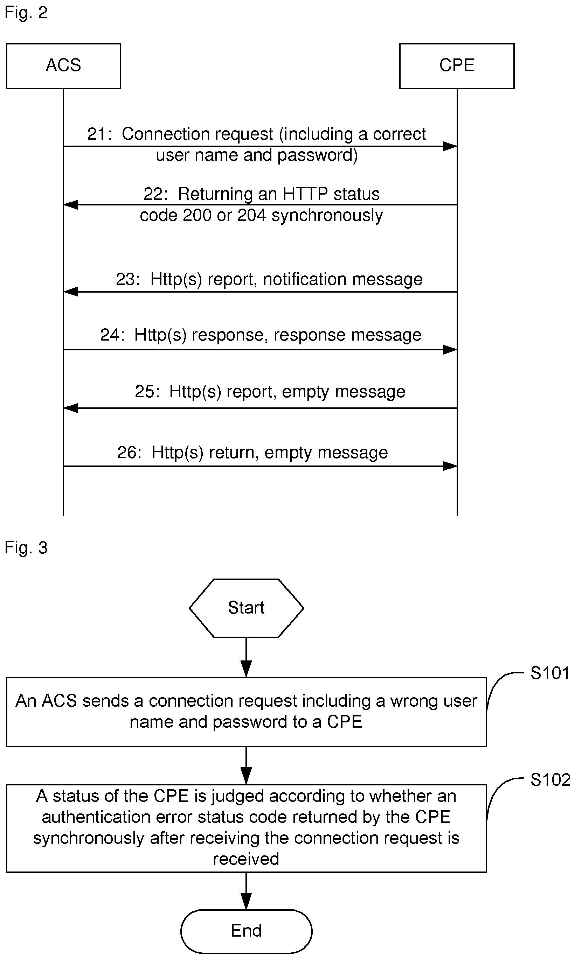

However, the problem of how to obtain the status of the device in real time and in bulk is not still solved well. In the existing Tr069 protocol, there are generally two following methods:
Method 1: a certain fixed parameter on the device is obtained according to the Tr069 protocol. If a value of the parameter can be obtained, then the device is in an online status, and if the value of the parameter cannot be obtained or protocol interaction is overtime, then the device is in an offline status. The process of the method is shown in Fig. 1. The method has the following drawbacks:
   1: The types of the devices are various, and the fixed parameter may not exist on a certain device, thereby causing that the device is online indeed but is considered as offline because the fixed parameter cannot be obtained.
   2: If a certain fixed parameter on a device wants to be obtained, then configuration must be performed based on the type of the device. If a type A of a device takes a value A1 and a type B of a device takes a value B1, then a functional structure of the network management server will be complex.
   3: It needs to undergo more times of Hyper Text Transport Protocol (HTTP) interaction by using the Tr069 protocol to obtain a parameter, and the efficiency is low.
Method 2: in an initial stage of obtaining a status, a network management server sends a connection request to the device, and uses an HTTP status code returned by a get method of the HTTP protocol to obtain the status of the device, as shown in Fig. 2. Since the connection request includes a user name and password of an ACS, the status code 200 or 204 can be obtained immediately after the connection request is sent. However, a Customer Premises Equipment (CPE) will then send an Inform message packet of a CONNECTION REQUEST event which is useless to obtain the status of the device. Compared with the method 1, the method 2 improves the efficiency, but protocol interaction exists between the CPE and the ACS, thereby consuming system performance.

### SUMMARY

The main purpose of the disclosure provides a method per claim 1, an auto-configuration server per claim 4 and a system per claim 7 for obtaining a status of a device based on a Tr069 protocol.

Dependent claims further define preferred embodiments.

In the method, ACS and system for obtaining a status of a device based on a Tr069 protocol provided by the disclosure, the ACS sends a connection request including a wrong user name and password to a CPE, learns that the CPE is in an online status according to an authentication error status code returned synchronously by the CPE, and when the ACS waits for timeout or receives other status codes, determines that the CPE is in an offline status. Therefore, compared with the related art, the disclosure can obtain the status of the device only by making an HTTP get call, and the method of the disclosure is simple and efficient.

### BRIEF DESCRIPTION OF THE DRAWINGS

Fig. 1 is a schematic flowchart of a method for obtaining a status of a device in the related art;
Fig. 2 is another schematic flowchart of a method for obtaining a status of a device in the related art;
Fig. 3 is a schematic flowchart of an embodiment of a method for obtaining a status of a device based on a Tr069 protocol according to the disclosure;
Fig. 4 is a schematic flowchart of judging a status of a CPE according to whether an authentication error status code returned by the CPE synchronously after receiving a connection request is received in an embodiment of a method for obtaining a status of a device based on a Tr069 protocol according to the disclosure;
Fig. 5 is a schematic flowchart of an interaction process of an ACS and a CPE in an embodiment of a method for obtaining a status of a device based on a Tr069 protocol according to the disclosure;
Fig. 6 is a structural diagram of an embodiment of an ACS for obtaining a status of a device based on a Tr069 protocol according to the disclosure; and
Fig. 7 is a structural diagram of an embodiment of a system for obtaining a status of a device based on a Tr069 protocol according to the disclosure.

### DETAILED DESCRIPTION

The solution of an embodiment of the disclosure mainly is: an ACS sends a connection request including a wrong user name and password to a CPE, determines that the CPE is in an online status according to an authentication error status code returned synchronously by the CPE, and determines that the CPE is in an offline status when the ACS waits for timeout or receives other status codes. The method of obtaining a status of a device according to the disclosure is simple and efficient.

Embodiments of the disclosure are implemented based on the existing Tr069 protocol.

As shown in Fig. 3, an embodiment of the disclosure provides a method for obtaining a status of a device based on a Tr069 protocol, which includes:
Step 101: an ACS sends a connection request including a wrong user name and password to a CPE.

Wherein, the user name and password are set as a character string combined by fixed or random digits and letters.

Similar to the existing method for obtaining a status of a device by using a correct user name and password shown in Fig. 2, the ACS sends a connection request to the CPE first. In the embodiment, the connection request includes the wrong user name and password, thereby avoiding the defect that protocol interaction between the CPE and the ACS brings about consumption for system performance when the status of the device is obtained by the correct user name and password included.

Step 102: a status of the CPE is judged according to whether an authentication error status code returned by the CPE synchronously after receiving the connection request is received.

In the embodiment, when the CPE is online and receives the connection request from the ACS, the CPE will returns an authentication error status code to the ACS synchronously. The authentication error status code is an HTTP status code.

When receiving the authentication error status code, the ACS can thus determine that the CPE is online; and when the ACS receives other status codes or the ACS waits for timeout, the ACS can thus determine that the CPE is offline.

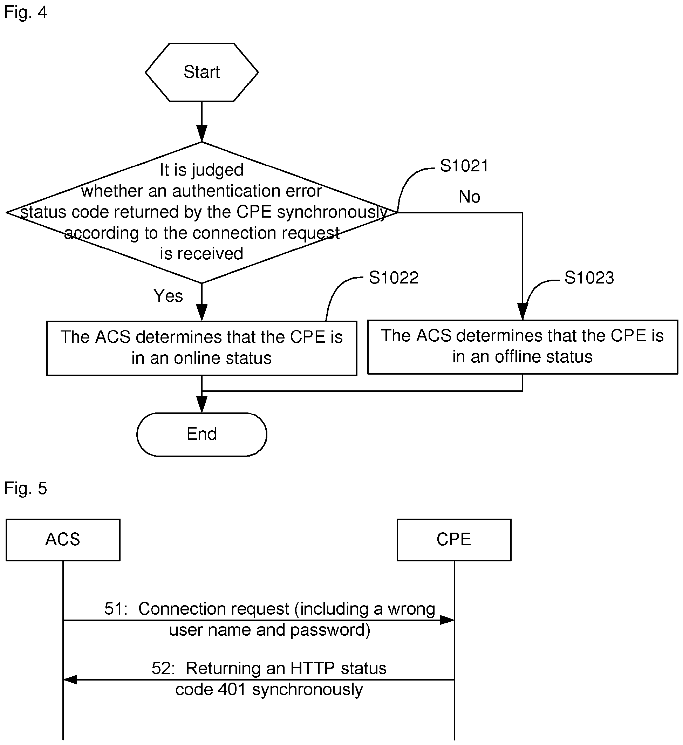

As shown in Fig. 4, step S102 includes:
Step S1021: it is judged whether an authentication error status code returned by the CPE synchronously according to the connection request is received, if yes, step S1022 is executed; otherwise, step S1023 is executed;
   the condition that the ACS does not receive the authentication error status code returned by the CPE synchronously according to the connection request includes: receiving a non-authentication error status code or waiting for timeout;
Step S1022: the ACS determines that the CPE is in an online status; and
Step S1023: the ACS determines that the CPE is in an offline status.

The technical solution of the embodiment is illustrated in detail below by comparing the embodiment with a method for obtaining a status of a device in the related art.

In the process of an existing method for obtaining a status of a device, as shown in Fig. 1, after an ACS sends a connection request to a CPE, the CPE returns a status code 200 or 204. Next, the CPE initiates a session. After performing Inform and InformResponse interactions, the CPE sends an empty package. The ACS sends a get command, and the CPE returns getResponse. This flow terminates. A specific interaction process thereof is as follows:
Step 11: the ACS initiates a connection request including a correct user name and password to the CPE;
Step 12: the CPE returns an HTTP status code 200 or 204 synchronously;
Step 13: the CPE reports an Inform message including a CONNECTION REQUEST event to indicate that the CPE has established a session with the ACS;
Step 14: the ACS returns an InformResponse message to the CPE;
Step 15: the CPE sends an empty message to the ACS;
Step 16: the ACS sends a GetParamemeterValues message to the CPE to obtain a certain parameter; and
Step 17: the CPE returns a GetParamemeterResponse message including the value of the parameter.

As shown in Fig. 2, a connection request is sent by using a correct user name and password. After the ACS sends the connection request to the CPE, the CPE returns a status code 200 or 204. Next, the CPE initiates a session, Inform and InformResponse interactions are performed. This flow of sending an empty package for each other terminates. A specific interaction process thereof is as follows:
Step 21: the ACS initiates a connection request including a correct user name and password to the CPE;
Step 22: the CPE returns an HTTP status code 200 or 204 synchronously;
Step 23: the CPE reports an Inform message including a CONNECTION REQUEST event to indicate that the CPE has established a session with the ACS;
Step 24: the ACS returns an InformResponse message to the CPE;
Step 25: the CPE sends an empty message to the ACS;
Step 26: the ACS sends an empty message to the CPE.

As shown in Fig. 5, Fig. 5 is a schematic diagram of an interaction process of an ACS and a CPE in the embodiment. The interaction process thereof is as follow:
S51: the ACS sends a connection request including a wrong user name and password to the CPE; and
S52: the CPE returns an HTTP status code 401 synchronously.

In the embodiment, since the connection request includes the wrong user name and password, the CPE cannot be activated to send an Inform message to the ACS but sends a status code 401 (authentication failure) to the ACS synchronously. After receiving the status code, the ACS can regard that the CPE is online. When the synchronous returning of the CPE is overtime, a program regards that the device is offline.

A comparative result of the embodiment and the related art is shown in Table 1.

**Table 1**

| | Synchronization/asynchronization | Whether protocol interaction exists | Time of obtaining a status of a device | Degradation of network management performance |
|---|---|---|---|---|
| Existing method 1 | Asynchronization | Existence | 5 | Large |
| Existing method 2 | Synchronization | Existence | Less than 1 second | Larger |
| Method of the disclosure | Synchronization | Inexistence | Less than 1 second | Small |

It can be known from the above table that, the related art needs to obtain the parameter of the device or introduce Tr069 protocol interaction, and the methods in the related art is complex and inefficient; and compared with the related art, the method of the disclosure is efficient and simple.

In the embodiment, in order to obtain a status of a device, when sending a connection request to the CPE, the ACS adds a wrong user name and password into the connection request according to the existing Tr069 protocol. When the CPE is online, the CPE will return an authentication error status code synchronously, and the ACS can judge whether the CPE is online according to whether the authentication error status code returned by the CPE is received. Compared with the related art, the embodiment can obtain the status of the device only by making an HTTP get call. Furthermore, the HTTP get call is a conventional synchronous call, therefore the process of obtaining the status of the device is simplified greatly and the consumption of system performance is reduced. The method of the disclosure applies, due to high efficiency and simplicity thereof, especially to the scenario that mass devices (such as terminal network management servers) poll for status.

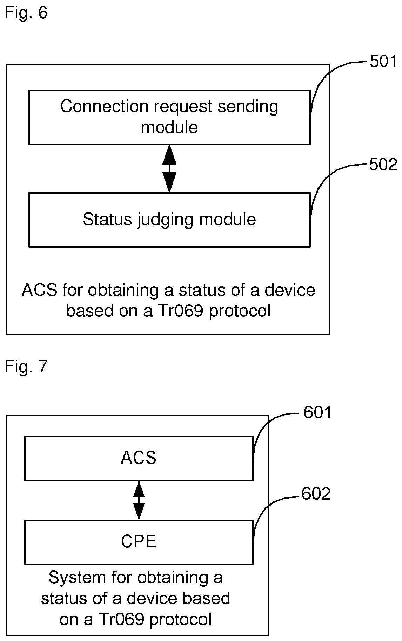

As shown in Fig. 6, an embodiment of the disclosure provides an ACS for obtaining a status of a device based on a Tr069 protocol, which includes: a connection request sending module 501 and a status judging module 502, wherein
the connection request sending module 501 is configured to send a connection request including a wrong user name and password to a CPE; and
the status judging module 502 is configured to judge a status of the CPE according to whether an authentication error status code returned by the CPE synchronously after receiving the connection request is received.

Specifically, the status judging module 502 is further configured, when receiving the authentication error status code returned by the CPE synchronously according to the connection request, to determine that the CPE is in an online status; and when receiving a non-authentication error status code or waiting for timeout, to determine that the CPE is in an offline status.

Wherein, the user name and password may be set as a character string combined by fixed or random digits and letters.

In the embodiment, similar to the existing method for obtaining a status of a device by using a correct user name and password shown in Fig. 2, the connection request sending module 501 of the ACS sends a connection request to the CPE first. In the embodiment, the connection request includes the wrong user name and password, thereby avoiding the defect that protocol interaction between the CPE and the ACS brings about consumption for system performance when the status of the device is obtained by the correct user name and password included.

When the CPE is online and receives the connection request from the ACS, the CPE will returns an authentication error status code to the ACS synchronously. The authentication error status code is an HTTP status code.

The status judging module 502 of the ACS judges whether the CPE is online according to whether the authentication error status code returned by the CPE synchronously is received. When receiving the authentication error status code, the ACS can thus determine that the CPE is online; when the ACS receives other status codes or the ACS waits for timeout, the ACS can thus determine that the CPE is offline.

As shown in Fig. 7, an embodiment of the disclosure provides a system for obtaining a status of a device based on a Tr069 protocol, which includes: an ACS 601 and a CPE 602, wherein
the ACS 601 is configured to send a connection request including a wrong user name and password to the CPE 602; and to judge a status of the CPE 602 according to whether an authentication error status code returned by the CPE 602 synchronously after receiving the connection request is received; and
the CPE 602 is configured to receive the connection request from the ACS 602; and when the CPE 602 is online, to return the authentication error status code to ACS 601.

Specifically, the ACS 601 is further configured, when receiving the authentication error status code returned by the CPE 602 synchronously according to the connection request, to determine that the CPE 602 is in an online status; and when receiving a non-authentication error status code or waiting for timeout, to determine that the CPE 602 is in an offline status.

In the method, ACS and system for obtaining a status of a device based on a Tr069 protocol provided by embodiments of the disclosure, the ACS sends a connection request including a wrong user name and password to a CPE, learns that the CPE is in an online status according to an authentication error status code returned synchronously by the CPE, and when the ACS waits for timeout or receives other status codes, determines that the CPE is in an offline status. Therefore, compared with the related art, the disclosure can obtain the status of the device only by making an HTTP get call, and the method of the disclosure is simple and efficient.

The above are only preferable embodiments of the disclosure, and are not intended to limit the scope of protection of the disclosure.

## Claims

1. A method for obtaining a status of a device based on a Tr069 protocol, **characterized in** comprising :
sending, by an Auto-Configuration Server, ACS, a connection request including a wrong user name and password to a Customer Premises Equipment, CPE, ; and
judging, by the ACS, a status of the CPE according to whether an authentication error status code returned by the CPE synchronously after receiving the connection request is received,
wherein the step of judging, by the ACS, a status of the CPE according to whether an authentication error status code returned by the CPE synchronously after receiving the connection request is received comprises:
when receiving the authentication error status code returned by the CPE synchronously according to the connection request, determining, by the ACS, that the CPE is in an online status; and
when the ACS receives a non-authentication error status code or waits for timeout, determining, by the ACS, that the CPE is in an offline status.

2. The method according to claim 1, wherein the authentication error status code is a Hyper Text Transport Protocol, HTTP, status code.

3. The method according to claim 1, wherein the user name and password are set as a character string combined by fixed or random digits and letters.

4. An Auto-Configuration Server, ACS, for obtaining a status of a device based on a Tr069 protocol, **characterized in** comprising :
a connection request sending module configured to send a connection request including a wrong user name and password to a Customer Premises Equipment, CPE, ; and
a status judging module configured to judge a status of the CPE according to whether an authentication error status code returned by the CPE synchronously after receiving the connection request is received,
wherein the status judging module is further configured, when receiving the authentication error status code returned by the CPE synchronously according to the connection request, to determine that the CPE is in an online status; and when receiving a non-authentication error status code or waiting for timeout, to determine that the CPE is in an offline status.

5. The ACS according to claim 4, wherein the authentication error status code is a Hyper Text Transport Protocol, HTTP, status code.

6. The ACS according to claim 4 or 5, wherein the user name and password are set as a character string combined by fixed or random digits and letters.

7. A system for obtaining a status of a device based on a Tr069 protocol, comprising: an Auto-Configuration Server, ACS, and a Customer Premises Equipment, CPE, wherein the system is **characterized in that**
the ACS is configured to send a connection request including a wrong user name and password to the CPE; and to judge a status of the CPE according to whether an authentication error status code returned by the CPE synchronously after receiving the connection request is received; and
the CPE is configured to receive the connection request from the ACS; and when the CPE is online, to return the authentication error status code to ACS,
wherein the ACS is further configured, when receiving the authentication error status code returned by the CPE synchronously according to the connection request, to determine that the CPE is in an online status; and when receiving a non-authentication error status code or waiting for timeout, to determine that the CPE is in an offline status.

## Patentansprüche

1. Ein Verfahren zum Erfahren eines Status einer Vorrichtung anhand eines Tr069-Protokolls, **dadurch gekennzeichnet, dass** es Folgendes umfasst:
das Senden, durch einen Auto Configuration Server, ACS, einer Verbindungsanfrage, die einen falschen Benutzernamen und ein Kennwort einschließt, an ein Customer Premises Equipment, CPE; und
das Beurteilen, durch den ACS, eines Status des CPE, je nachdem, ob ein Authentifizierungsfehler-Statuscode, der vom CPE synchron nach Empfang der Verbindungsanfrage zurückgeliefert wird, empfangen wird;
wobei der Schritt des Beurteilens, durch den ACS, eines Status des CPE, je nachdem, ob ein Authentifizierungsfehler-Statuscode, der vom CPE synchron nach Empfang der Verbindungsanfrage zurückgeliefert wird, empfangen wird, Folgendes umfasst:
bei Empfang des Authentifizierungsfehler-Statuscodes, der vom CPE synchron entsprechend der Verbindungsanfrage zurückgeliefert wird, das Bestimmen, durch den ACS, dass das CPE sich im Online-Status befindet; und
wenn der ACS einen Nicht-Authentifizierungsfehler-Statuscode empfängt oder auf Timeout wartet, das Bestimmen, durch den ACS, dass das CPE sich im Offline-Status befindet.

2. Das Verfahren gemäß Anspruch 1, wobei der Authentifizierungsfehler-Statuscode ein Hyper Text Transport Protocol-, HTTP-, Statuscode ist.

3. Das Verfahren gemäß Anspruch 1, wobei der Benutzername und das Kennwort als Zeichenkette festgelegt werden, kombiniert durch feste oder zufällig ausgewählte Ziffern und Buchstaben.

4. Ein Auto Configuration Server, ACS,
zum Erfahren eines Status einer Vorrichtung anhand eines Tr069-Protokolls; **dadurch gekennzeichnet, dass** er Folgendes umfasst:
ein Verbindungsanfragen-Sendemodul, konfiguriert, um eine Verbindungsanfrage, die einen falschen Benutzernamen und ein Kennwort einschließt, an ein Customer Premises Equipment, CPE, zu senden; und
ein Status-Beurteilungsmodul, konfiguriert, um einen Status des CPE zu beurteilen, je nachdem, ob ein Authentifizierungsfehler-Statuscode, der vom CPE synchron nach Empfang der Verbindungsanfrage zurückgeliefert wird, empfangen wird;
wobei das Status-Beurteilungsmodul weiter konfiguriert ist, um bei Empfang des Authentifizierungsfehler-Statuscodes, der vom CPE synchron entsprechend der Verbindungsanfrage zurückgeliefert wird, zu bestimmen, dass das CPE sich im Online-Status befindet; und bei Empfang eines Nicht-Authentifizierungsfehler-Statuscodes oder beim Warten auf Timeout, zu bestimmen, dass das CPE sich im Offline-Status befindet.

5. Der ACS gemäß Anspruch 4, wobei der Authentifizierungsfehler-Statuscode ein Hyper Text Transport Protocol-, HTTP-, Statuscode ist.

6. Der ACS gemäß Anspruch 4 oder 5, wobei der Benutzername und das Kennwort als Zeichenkette festgelegt werden, kombiniert durch feste oder zufällig ausgewählte Ziffern und Buchstaben.

7. Ein System zum Erfahren eines Status einer Vorrichtung anhand eines Tr069-Protokolls, das einen Auto Configuration Server, ACS, und ein Customer Premises Equipment, CPE, umfasst; wobei das System **dadurch gekennzeichnet ist, dass**
der ACS konfiguriert ist, um eine Verbindungsanfrage, die einen falschen Benutzernamen und ein Kennwort einschließt, an das CPE zu senden und einen Status des CPE zu beurteilen, je nachdem, ob ein Authentifizierungsfehler-Statuscode, der vom CPE synchron nach Empfang der Verbindungsanfrage zurückgeliefert wird, empfangen wird; und
das CPE konfiguriert ist, um die Verbindungsanfrage vom ACS zu empfangen und, wenn das CPE online ist, den Authentifizierungsfehler-Statuscode an den ACS zurückzuliefern;
wobei der ACS weiter konfiguriert ist, um bei Empfang des Authentifizierungsfehler-Statuscodes, der vom CPE synchron entsprechend der Verbindungsanfrage zurückgeliefert wird, zu bestimmen, dass das CPE sich im Online-Status befindet, und bei Empfang eines Nicht-Authentifizierungsfehler-Statuscodes oder beim Warten auf Timeout zu bestimmen, dass das CPE sich im Offline-Status befindet.

## Revendications

1. Procédé pour obtenir un état d'un dispositif sur la base d'un protocole Tr069, **caractérisé en ce qu'**il comprend :
l'envoi, par un serveur d'auto-configuration, ACS, d'une demande de connexion contenant des nom d'utilisateur et mot de passe incorrects à un équipement des locaux d'abonné, CPE ; et
l'évaluation, par l'ACS, d'un état du CPE selon qu'un code d'état d'erreur d'authentification renvoyé par le CPE de façon synchrone après réception de la demande de connexion est reçu ou non,
dans lequel l'étape d'évaluation, par l'ACS, d'un état du CPE selon qu'un code d'état d'erreur d'authentification renvoyé par le CPE de façon synchrone après réception de la demande de connexion est reçu ou non comprend :
lors de la réception du code d'état d'erreur d'authentification renvoyé par le CPE de façon synchrone conformément à la demande de connexion, la détermination, par l'ACS, que le CPE est dans un état en ligne ; et
lorsque l'ACS reçoit un code d'état autre que d'erreur d'authentification ou attend jusqu'à dépassement de temps, la détermination, par l'ACS, que le CPE est dans un état hors ligne.

2. Procédé selon la revendication 1, dans lequel le code d'état d'erreur d'authentification est un code d'état de protocole de transfert hypertexte, HTTP.

3. Procédé selon la revendication 1, dans lequel les nom d'utilisateur et mot de passe sont établis sous la forme d'une chaîne de caractères combinée par des chiffres et des lettres fixes ou aléatoires.

4. Serveur d'auto-configuration, ACS, pour obtenir un état d'un dispositif sur la base d'un protocole Tr069, **caractérisé en ce qu'**il comprend :
un module d'envoi de demande de connexion configuré pour envoyer une demande de connexion contenant des nom d'utilisateur et mot de passe incorrects à un équipement des locaux d'abonné, CPE ; et
un module d'évaluation d'état configuré pour évaluer un état du CPE selon qu'un code d'état d'erreur d'authentification renvoyé par le CPE de façon synchrone après réception de la demande de connexion est reçu ou non,
dans lequel le module d'évaluation d'état est en outre configuré, lors de la réception du code d'état d'erreur d'authentification renvoyé par le CPE de façon synchrone conformément à la demande de connexion, pour déterminer que le CPE est dans un état en ligne ; et lors de la réception d'un code d'état autre que d'erreur d'authentification ou d'une attente jusqu'à dépassement de temps, pour déterminer que le CPE est dans un état hors ligne.

5. ACS selon la revendication 4, dans lequel le code d'état d'erreur d'authentification est un code d'état de protocole de transfert hypertexte, HTTP.

6. ACS selon la revendication 4 ou 5, dans lequel les nom d'utilisateur et mot de passe sont établis sous la forme d'une chaîne de caractères combinée par des chiffres et des lettres fixes ou aléatoires.

7. Système pour obtenir un état d'un dispositif sur la base d'un protocole Tr069, comprenant : un serveur d'auto-configuration, ACS, et un équipement des locaux d'abonné, CPE, le système étant **caractérisé en ce que**
l'ACS est configuré pour envoyer une demande de connexion contenant des nom d'utilisateur et mot de passe incorrects au CPE ; et pour évaluer un état du CPE selon qu'un code d'état d'erreur d'authentification renvoyé par le CPE de façon synchrone après réception de la demande de connexion est reçu ou non ; et
le CPE est configuré pour recevoir la demande de connexion provenant de l'ACS ; et quand le CPE est en ligne, pour renvoyer le code d'état d'erreur d'authentification à l'ACS,
dans lequel l'ACS est en outre configuré, lors de la réception du code d'état d'erreur d'authentification renvoyé par le CPE de façon synchrone conformément à la demande de connexion, pour déterminer que le CPE est dans un état en ligne ; et lors de la réception d'un code d'état autre que d'erreur d'authentification ou d'une attente jusqu'à dépassement de temps, pour déterminer que le CPE est dans un état hors ligne.
